# FASCICULE DE BREVET EUROPEEN

(11) **EP 2 071 127 B1**
(45) Date de publication et mention de la délivrance du brevet: **06.06.2018**
(21) Numéro de dépôt: 08168916.8
(22) Date de dépôt: 12.11.2008
(51) Int. Cl.: F01D 5/14, F01D 9/04

(54) **Procédé de conception d'une turbine multi-étages de turbomachine**
Entwurfsverfahren einer Mehrstufenturbine eines Turbotriebwerks
Method of designing a multi-stage turbine of a turbomachine

(30) Priorité: 14.12.2007 FR 0708710
(43) Date de publication de la demande: 17.06.2009
(73) Titulaire: Snecma, 75015 Paris (FR)
(72) Inventeur: Guimbard, Jean-Michel, 77930 Cely en Biere (FR); Kueny, Olivier, 91230 Montgeron (FR); Schwartz, Eric, 77240 Seine Port (FR)
(74) Mandataire: Pichat, Thierry

(56) Documents cités:
- EP-A- 1 182 339
- EP-A- 1 201 880
- EP-A- 1 247 938
- EP-A- 1 724 440
- WO-A-95/29331

## Description

La présente invention concerne un procédé de conception d'une turbine multi-étages de turbomachine telle qu'un turboréacteur ou un turbopropulseur d'avion.

Une turbine de turbomachine comprend une pluralité d'étages qui sont chacun formés d'une grille ou d'un aubage fixe de stator et d'une grille ou d'un aubage mobile de rotor. Chaque aubage est formé d'une rangée annulaire d'aubes régulièrement réparties autour de l'axe longitudinal de la turbine. Les aubes d'un aubage de rotor sont portées par un disque relié à l'arbre de la turbine, et les aubes d'un aubage de stator sont accrochées sur un carter externe de la turbine.

Les aubes des aubages s'étendent sensiblement sur toute la dimension radiale de la veine d'écoulement des gaz chauds dans la turbine. Ces gaz chauds sortent de la chambre de combustion de la turbomachine et s'écoulent dans la turbine en fournissant de l'énergie aux aubages de rotor qui entraînent en rotation l'arbre de la turbine.

Pour améliorer les performances de la turbine, il est connu de réaliser un couplage aérodynamique multi-étages entre deux aubages de rotor consécutifs séparés l'un de l'autre par un aubage de stator, ou entre deux aubages de stator consécutifs séparés l'un de l'autre par un aubage de rotor.

Le couplage aérodynamique multi-étages consiste à sélectionner deux aubages consécutifs du même type (c'est-à-dire deux aubages de rotor ou deux aubages de stator) et ayant le même nombre d'aubes ou un multiple du nombre d'aubes d'un aubage de même type situé en amont, et à positionner angulairement l'aubage aval par rapport à l'aubage amont de sorte que les sillages formés au niveau des bords de fuite des aubes de l'aubage amont viennent impacter avec une certaine tolérance sur les bords d'attaque des aubes de l'aubage aval.

On a déjà proposé des méthodes de conception de turbine de façon à réaliser ce couplage. Cependant, ces méthodes font intervenir des calculs complexes qui sont très coûteux en temps, ce qui est incompatible avec les délais traditionnels de conception. Par ailleurs, ces méthodes ne prennent pas toujours en compte le couplage aérodynamique multi-étages sur toute la hauteur de la veine de turbine, c'est à dire sur toute la dimension radiale des aubes des aubages. Enfin, les méthodes actuellement disponibles sont appliquées sur seulement un couple d'aubages de même type, c'est-à-dire sur un étage et demi de la turbine (aubage de stator/ aubage de rotor/ aubage de stator ou aubage de rotor/ aubage de stator/aubage de rotor), et doivent donc être répétées plusieurs fois pour concevoir les différents étages de la turbine (voir par exemple le document EP-A1-1 724 440). Ce dernier principe présente un inconvénient majeur : les couples d'aubages sont positionnés angulairement indépendamment des autres couples d'aubages, alors que chaque aubage devrait dépendre de la position angulaire de l'aubage situé en amont et influencer la position angulaire de l'aubage situé en aval, en prenant en compte toute la hauteur de la veine de turbine. L'inconvénient est d'aboutir, sans le recourt à un processus itératif long et coûteux en calculs, à une configuration de turbine non optimale pour le couplage aérodynamique multi-étages.

L'invention a notamment pour but d'apporter une solution simple, efficace et économique à ces problèmes.

Elle a pour objet un procédé de conception qui permette de réaliser le couplage aérodynamique multi-étages simultanément sur l'ensemble des aubages de rotor ou de stator de la turbine, et ce sur sensiblement toute la hauteur de la veine de turbine.

Elle propose à cet effet un procédé de conception d'une turbine multi-étages de turbomachine, chaque étage de la turbine comprenant un aubage de stator et un aubage de rotor formés chacun d'une rangée annulaire d'aubes, les aubages de stator (ou de rotor, respectivement) comportant chacun un même nombre d'aubes ou un multiple du nombre d'aubes d'un aubage de même type situé en amont, caractérisé en ce qu'il consiste, pour tous les aubages de stator ou de rotor, à :
a) modifier simultanément les géométries des aubes des différents aubages, pour redresser les sillages des bords de fuite de ces aubes, sur sensiblement toute la dimension radiale des aubes, puis
b) positionner angulairement les aubages, les uns par rapport aux autres, de sorte que les sillages des aubes de stator (ou de rotor, respectivement) d'un étage n viennent impacter avec une certaine tolérance d'angle sur les bords d'attaque des aubes de stator (ou de rotor, respectivement) d'un étage aval n+1, pour réaliser un couplage aérodynamique multi-étages simultanément sur l'ensemble de la turbine.

L'invention s'applique indifféremment aux aubages de rotor ou aux aubages de stator de la turbine, afin de réaliser le couplage aérodynamique multi-étages simultanément sur l'ensemble des aubages d'un même type de la turbine, et sur sensiblement toute la hauteur de la veine de turbine, c'est-à-dire sur toute la dimension radiale des aubes. Le terme aubage est donc employé dans la présente demande pour désigner soit un aubage de rotor, soit un aubage de stator.

Le procédé selon l'invention consiste dans un premier temps à modifier ou optimiser simultanément les géométries des aubes de rotor ou de stator des différents étages, de façon à redresser les sillages des aubes, au niveau de leurs bords de fuite, sur toute la dimension radiale des aubes.

Selon la présente invention, on entend par redressement des sillages le fait de remettre sensiblement droits les profils de ces sillages, ces profils étant formés par des intersections entre les lignes d'écoulement de ces sillages et un plan perpendiculaire à l'axe de rotation de la turbine sensiblement au niveau des bords d'attaque des aubes d'un aubage. Le sillage du bord de fuite d'une aube a en général un profil déformé ou ondulé qui, même s'il est aligné au mieux avec le bord d'attaque d'une aube de même type de l'étage suivant, ne permet pas d'optimiser le couplage aérodynamique multi-étages. L'invention permet de remédier à cet inconvénient en redressant les sillages des aubes préalablement aux réglages et aux calages angulaires des différents aubages de même type considérés de la turbine.

Le procédé consiste ensuite à positionner angulairement les aubages, les uns par rapport aux autres, de sorte que les sillages des aubes de stator (ou de rotor, respectivement) d'un étage n viennent impacter avec une certaine tolérance sur les bords d'attaque des aubes de stator (ou de rotor, respectivement) d'un étage aval n+1.

La turbine comprend un nombre fini d'étages. L'aubage de rotor ou de stator du second étage de la turbine est positionné angulairement par rapport à l'aubage du même type du premier étage situé en amont, cette étape étant facilitée par le redressement des sillages réalisé à l'étape précédente. La position angulaire du second aubage par rapport au premier aubage est déterminée pour que les sillages des aubes du premier aubage viennent impacter sur les bords d'attaque des aubes de même type du second aubage, avec une certaine tolérance d'angle qui correspond en général à un pourcentage du pas entre deux aubes adjacentes de cet aubage. L'aubage de même type du troisième étage situé en aval du second étage est positionné angulairement à son tour de la même manière que décrit précédemment, et ainsi de suite jusqu'au dernier étage aval de la turbine.

Le procédé peut consister, à l'étape a), à :
1) définir les géométries des aubes des différents aubages sur sensiblement toute la dimension radiale des aubes,
2) déterminer l'écoulement moyen des gaz autour des aubes des différents aubages, sur sensiblement toute la dimension radiale des aubes, par exemple par un calcul d'écoulement axisymétrique sur toute la turbine,
3) déterminer l'évolution des sillages des aubes des différents aubages, et
4) vérifier que les sillages des aubes de stator (ou de rotor, respectivement) d'un étage n sont sensiblement parallèles, avec une tolérance d'angle donnée, aux bords d'attaque des aubes de stator (ou de rotor, respectivement) d'un étage aval n+1, respectivement.

Les géométries des aubes peuvent être modifiées en faisant varier un ou plusieurs paramètres choisis par exemple parmi la répartition spatiale des aubes, la courbure des aubes, les positions angulaires des bords d'attaque et de fuite des aubes, etc. La géométrie des aubes d'un aubage peut être identique à ou différente de celle des aubes des autres étages.

L'écoulement moyen des gaz entre les aubes peut être déterminé par au moins un calcul d'écoulement axisymétrique sur toute la turbine, et sur toute la dimension radiale des aubes, ce calcul étant par exemple basé sur le principe de l'équilibre radial ou sur le théorème d'Euler.

On analyse ensuite l'évolution des sillages des aubes des différents aubages au moyen d'un outil logiciel approprié, et on vérifie que les sillages s'étendent sensiblement radialement et parallèlement aux bords d'attaque des aubes de l'aubage situé en aval.

Dans le cas où cette vérification n'est pas satisfaisante, le procédé selon l'invention peut en outre consister à :
5) modifier les géométries des aubes des différents aubages, sur toute la dimension radiale des aubes,
6) vérifier les comportements aérodynamiques des aubes modifiées, par exemple par des calculs d'écoulements stationnaires en deux ou en trois dimensions pour chaque aubage, et
7) recommencer les étapes 2), 3) et 4).

Préférentiellement, lors de la modification des géométries des aubes d'un aubage, le procédé consiste à conserver la répartition de charges moyenne de cet aubage de façon à ce que ces modifications n'aient pas d'influence directe sur les performances de la turbine.

Les calculs d'écoulements stationnaires qui peuvent être utilisés à l'étape 6) sont par exemple basés sur les équations de Navier Stokes en deux dimensions (2D) ou en trois dimensions (3D), et permettent de vérifier le comportement de chaque aube sur une ou plusieurs lignes de courant.

Les étapes 5), 6) et 7) précitées peuvent être répétées une ou plusieurs fois jusqu'à ce que les sillages des aubes de chaque aubage soient suffisamment redressés et sensiblement alignés avec les bords d'attaque des aubes de l'aubage de même type situé directement en aval.

Afin de limiter le nombre des répétitions de la boucle constituée par les étapes 5), 6) et 7), il est possible d'utiliser un algorithme d'optimisation qui, en fonction des résultats à l'étape 4), déduit à partir de bases de données les modifications géométriques les plus appropriées à appliquer aux aubages à l'étape 5).

Le procédé selon l'invention peut en outre consister, après l'étape 4) ou 7), à vérifier le comportement aérodynamique de la turbine en analysant l'évolution des gaz dans la turbine, par exemple par un calcul d'écoulement stationnaire en trois dimensions.

Cette étape permet de valider les modifications des géométries des aubes en évaluant le comportement aérodynamique global de la turbine, sans tenir compte des effets de couplage aérodynamique multi-étages qui n'ont pas encore été optimisés. Cette étape peut être réalisée par au moins un calcul d'écoulement stationnaire basé sur les équations de Navier Stokes en 3D.

Le procédé peut consister, à l'étape b), à :
i) identifier, par exemple par au moins un calcul d'écoulement instationnaire basé sur les équations de Navier Stokes en 3D, la position angulaire optimale de l'aubage de stator (ou de rotor, respectivement) de chaque étage n+1 par rapport à l'aubage de stator (ou de rotor, respectivement) de l'étage n et aux sillages des aubes de l'aubage de cet étage n, et à
ii) positionner angulairement les aubages, les uns par rapport aux autres, depuis l'amont jusqu'à l'aval, de sorte que les sillages des aubes de stator (ou de rotor, respectivement) d'un étage n viennent impacter avec une certaine tolérance d'angle sur les bords d'attaque des aubes de stator (ou de rotor, respectivement) d'un étage aval n+1.

L'invention concerne également un procédé de fabrication d'une turbine multi-étages de turbomachine, caractérisé en ce qu'il consiste à concevoir une turbine par le procédé tel que décrit ci-dessus, puis à réaliser cette turbine avec des aubages définis par ce procédé de conception.

L'invention concerne également une turbomachine, telle qu'un turboréacteur ou un turbopropulseur d'avion, caractérisée en ce qu'elle comprend une turbine conçue et fabriquée comme indiqué ci-dessus.

L'invention sera mieux comprise et d'autres caractéristiques, détails et avantages de celle-ci apparaîtront plus clairement à la lecture de la description qui suit, faite à titre d'exemple non limitatif et en référence aux dessins annexés, dans lesquels :
- la figure 1 est une vue très schématique partielle d'une turbine multi-étages de turbomachine, vue de dessus ;
- la figure 2 est une vue schématique en perspective de trois aubes d'un étage de la turbine de la figure 1, et représente le profil des sillages au niveau des bords d'attaque de ces aubes ;
- la figure 3 est une vue correspondant à la figure 2 et représente le profil des sillages au niveau des bords d'attaque des aubes, après une étape du procédé selon l'invention de redressement de ces sillages ;
- la figure 4 est un organigramme illustrant les différentes étapes du procédé selon l'invention.

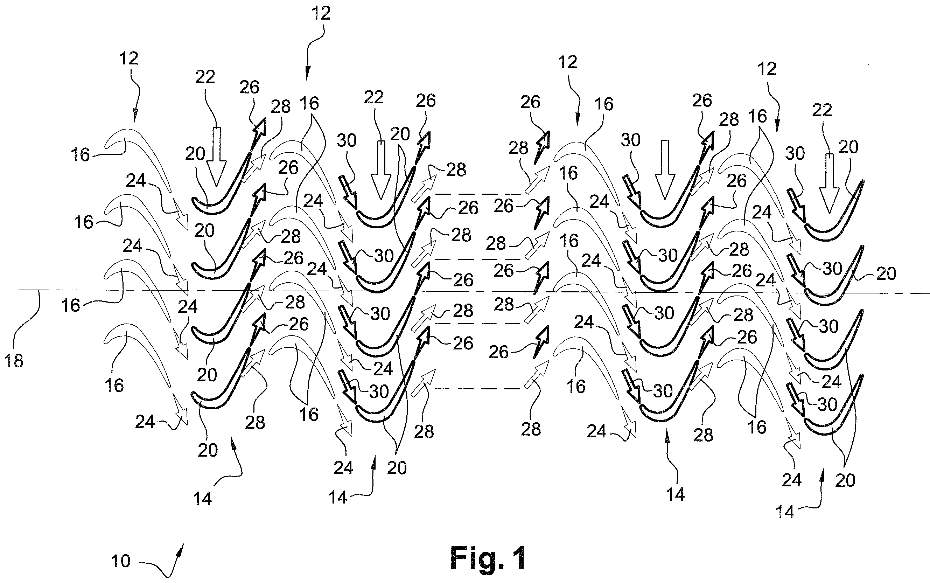

On se réfère d'abord à la figure 1 qui représente partiellement et de manière très schématique une turbine multi-étages 10 d'une turbomachine telle qu'un turboréacteur ou un turbopropulseur d'avion, cette turbine 10 comportant un nombre k fini d'étages comportant chacun une grille ou un aubage de stator 12, et une grille ou un aubage de rotor 14 situé en aval de l'aubage de stator 12.

Chaque aubage de stator 12 comprend une pluralité d'aubes 16 qui sont régulièrement réparties autour de l'axe longitudinal 18 de la turbine et qui sont portées par un carter externe non représenté de la turbine. Chaque aubage de rotor 14 comprend une pluralité d'aubes 20 qui sont portées par un disque non représenté et qui sont également régulièrement réparties autour de l'axe 18 de la turbine.

Les aubages de stator 12 et les aubages de rotor 14 comprennent le même nombre d'aubes 16, 20. En variante, le nombre d'aubes 16, 20 d'un aubage 12, 14 peut être un multiple du nombre d'aubes d'un aubage de même type situé en amont. Les aubages d'un même type peuvent donc chacun comporter un nombre px d'aubes, x étant un nombre donné d'aubes et p étant un entier positif égal à 1, 2, 3, voire plus. Dans l'exemple représenté, les aubages de rotor 14 et de stator 12 représentés comprennent chacun quatre aubes, pour des raisons de clarté.

Les aubages de rotor 14 sont entraînés en rotation dans le même sens (schématiquement représenté par les flèches 22) autour de l'axe 18. Les aubages de stator sont fixes et leurs aubes sont destinées à redresser l'écoulement des gaz dans la turbine. Les aubes 16, 20 comprennent de façon connue un bord amont d'attaque et un bord aval de fuite des gaz s'écoulant dans la veine de la turbine.

Dans la technique actuelle, il est connu de positionner angulairement les aubages de rotor 14 les uns par rapport aux autres de façon à ce que les sillages des aubes 20 d'un aubage de rotor amont viennent impacter avec une certaine tolérance d'angle sur les bords d'attaque des aubes 20 de l'aubage de rotor situé directement en aval, c'est-à-dire séparé de l'aubage de rotor amont par un seul aubage de stator. Ce couplage aérodynamique multi-étages permet notamment d'améliorer les performances de la turbine et de la turbomachine en général. Ce couplage peut également être réalisé sur les aubages de stator 12, de la même manière que pour les aubages de rotor 14.

Dans l'exemple de la figure 1, les flèches 24 et 26 représentent respectivement les sillages des bords de fuite des aubes 16 de l'aubage de stator 12 et des bords de fuite des aubes 20 de l'aubage de rotor 14 d'un étage n, et les flèches 28 et 30 représentent respectivement ces sillages qui ont traversé l'aubage de type différent de l'étage n et qui parviennent au niveau des bords d'attaque des aubes 16 de stator et au niveau des bords d'attaque des aubes 20 de rotor de l'étage n+1.

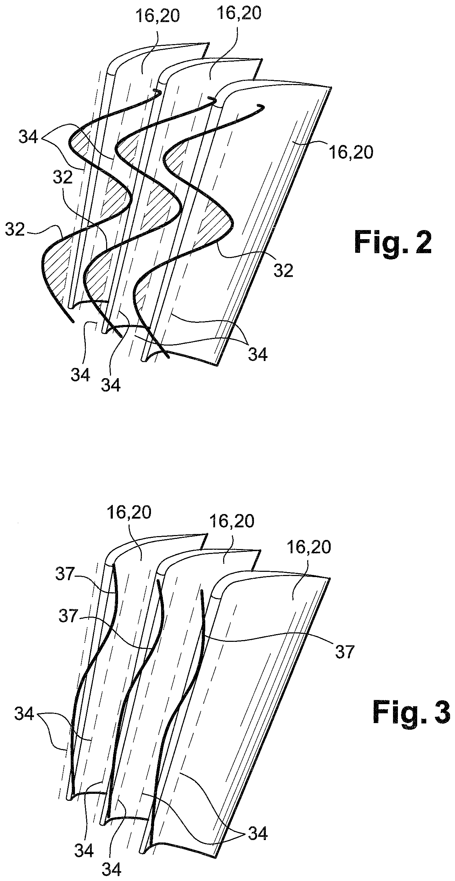

La partie avant ou frontale de ces sillages a une forme relativement complexe qui évolue au fur et à mesure de son avance dans la veine de la turbine. Lorsque le front d'un sillage arrive au niveau d'un bord d'attaque d'une aube 16, 20, il a en général un profil ondulé ou déformé qui est schématiquement représenté par la courbe 32 en figure 2. Cette courbe 32 est obtenue par l'intersection des lignes d'écoulement d'un sillage avec un plan perpendiculaire à l'axe de la turbine sensiblement au droit des bords d'attaque des aubes 16, 20.

Dans la technique actuelle, le couplage aérodynamique multi-étages est réalisé par positionnement angulaire des aubages de même type les uns par rapport aux autres de sorte que les sillages représentés par la courbe 32 soient au mieux alignés avec les bords d'attaque des aubes 16, 20. Cependant, le couplage aérodynamique multi-étages n'est pas dans ce cas optimal, en particulier parce qu'une grande partie des sillages (parties hachurées en figure 2) est éloignée des bords d'attaque des aubes et ne vient pas impacter sur ces bords. On définit en général des tolérances angulaires de position du bord d'attaque (représentées par les traits pointillés 34) pour lesquelles on considère que le sillage formé directement en amont vient impacter sur le bord d'attaque de l'aube. Ces tolérances 34 peuvent être exprimées en pourcentage du pas entre deux aubes adjacentes 16, 20 de l'aubage considéré. Cette tolérance est par exemple de +/- 15% du pas entre deux aubes adjacentes. Les parties hachurées des sillages sont situées en dehors de ces tolérances 34 et ne participent donc pas au couplage aérodynamique multi-étages.

L'invention permet de remédier à ce problème en redressant les sillages des bords de fuite des aubes 16, 20, avant de positionner angulairement les aubages de stator 12 ou de rotor 14 les uns par rapport aux autres.

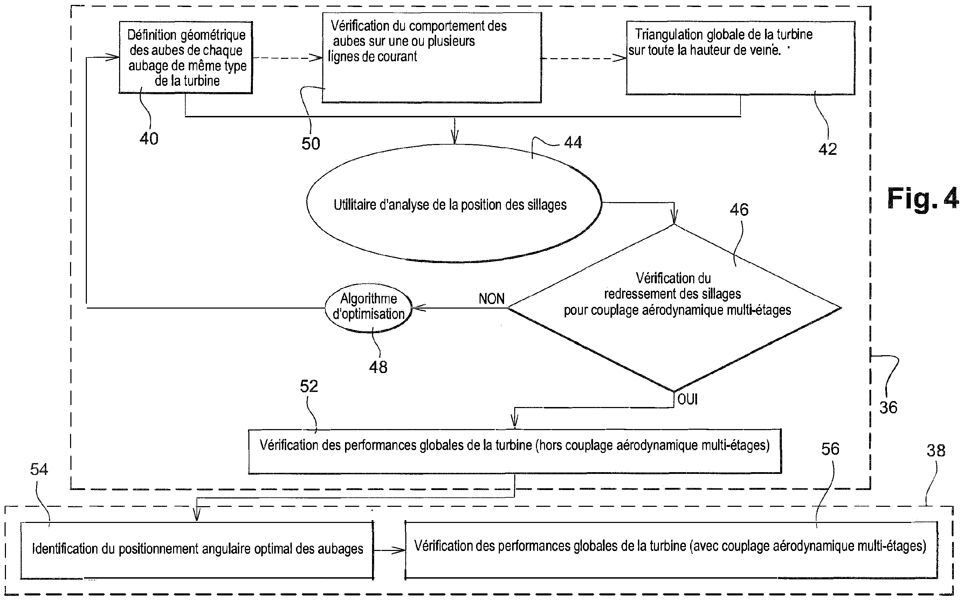

La figure 4 représente un organigramme représentant un mode de réalisation non limitatif du procédé selon l'invention.

Ce procédé comporte deux phases essentielles 36 et 38 qui sont schématiquement représentés par des rectangles en traits pointillés et qui consistent, pour la première phase 36, à modifier ou optimiser simultanément les géométries des aubes de tous les aubages d'un même type de la turbine, pour redresser les sillages des bords de fuite de ces aubes, sur sensiblement toute leur dimension radiale, et pour la seconde phase 38, à positionner angulairement les aubages considérés, les uns par rapport aux autres, de sorte que les sillages précités viennent impacter avec une certaine tolérance d'angle sur les bords d'attaque des aubes situés directement en aval.

Le but de la première phase 36 est donc de redresser les sillages de sorte que leurs fronts soient sensiblement parallèles aux bords d'attaque des aubes situées en aval. Dans l'exemple représenté en figure 3, le redressement des sillages est visible par un aplanissement du profil des fronts des sillages, ce profil étant schématiquement représenté par la courbe 37 légèrement ondulée.

La seconde phase 38 de positionnement angulaire des aubages est facilitée et consiste à positionner ces profils dans les tolérances de position angulaire prédéterminées pour assurer un alignement correct entre les sillages et les bords d'attaque des aubes, et pour un couplage aérodynamique multi-étages optimal. Il n'y a pas de partie hachurée en figure 3, ce qui signifie que l'intégralité des sillages vient impacter sur les bords d'attaque des aubes 16, 20 grâce au procédé selon l'invention.

Plus précisément, la première phase 36 du procédé selon l'invention consiste tout d'abord (étape 40) à définir la géométrie des aubes de chaque aubage de même type de la turbine. Une turbine qui comprend k étages, comporte k aubages de même type et donc k rangées d'aubes de ce type dont la géométrie est à optimiser. La géométrie des aubes d'un étage peut être différente de celles d'un autre étage et est définie par un ou plusieurs paramètres choisis par exemple parmi la répartition spatiale des aubes, la courbure ou cambrure des aubes, les positions angulaires des bords d'attaque et de fuite des aubes, l'angle géométrique en entrée et en sortie, l'empilement axial et azimutal, etc. Cette géométrie est déterminée sur sensiblement toute la dimension radiale de l'aube.

On peut également imposer des paramètres géométriques qui restent constants pendant tout le procédé. C'est par exemple le cas de la répartition de charge moyenne de chaque aubage qui est de préférence maintenue constante pour ne pas influencer de façon défavorable le rendement de la turbine, lié notamment à cette répartition de charges par étage.

En pratique, le couplage aérodynamique multi-étages est réalisé sur une certaine hauteur de veine qui correspond par exemple à 80% de la hauteur de veine, c'est-à-dire sensiblement 80% de la dimension radiale des aubes. Les 20% restants correspondent à des portions périphériques interne et externe (respectivement de 10 % chacune) de la veine de turbine dans lesquelles l'écoulement des gaz est affecté par des phénomènes secondaires (zones de turbulences importantes) et est complexe. Il est donc difficile d'y réaliser un couplage aérodynamique multi-étages.

Le procédé consiste ensuite (étape 42) à déterminer le profil de l'écoulement des gaz autour des aubes de chaque aubage considéré, sur sensiblement toute la dimension radiale des aubes. Cette étape 42 permet d'obtenir une triangulation globale de la turbine sur plusieurs hauteurs de veine et sur sensiblement toute la dimension radiale des aubes. Cette étape 42 permet également de déterminer les obstructions liées à l'encombrement des aubages, les positions des lignes de courant, ainsi que la vitesse moyenne des particules de fluide sur ces lignes de courant. L'étape 42 peut être réalisée par un calcul d'écoulement axisymétrique sur toute la turbine, basé sur le principe de l'équilibre radial ou sur le théorème d'Euler. Ce type de calcul est bien connu de l'homme du métier et est décrit dans les publications suivantes :
- L.H. Smith, JR., Journal of Engineering for power, January 1966, "The Radial-Equilibrium Equation of Turbomachinery,"
- R. A. Novak, Transactions of the ASME, October 1967, "Streamline Curvature Computing Procédures for Fluid-Flow Problems."

L'étape 44 suivante consiste à déterminer l'évolution des sillages formés par les aubes de chaque aubage. Cette étape 44 peut être réalisée au moyen d'un utilitaire approprié qui analyse l'évolution de la position des sillages. Cet utilitaire permet de déterminer par calcul, le cheminement moyen des particules de fluide des sillages depuis chaque aubage jusqu'à l'aubage de même type situé en aval, et ce sur toute la hauteur de la veine de turbine ou sur sensiblement toute cette hauteur (par exemple 80% de cette hauteur dans le cas décrit précédemment). Cet utilitaire utilise notamment les vitesses des particules de fluide de l'écoulement moyen calculées à l'étape 42, ainsi que la géométrie des aubes, pour pouvoir déterminer l'évolution en fonction du temps de la position spatiale des particules de fluide de l'écoulement moyen dans toute la turbine (en dehors des zones affectées par les phénomènes secondaires précités).

On vérifie ensuite, lors d'une étape 46, si les sillages sont suffisamment « redressés », c'est-à-dire si le profil de ces sillages est sensiblement parallèle aux bords d'attaque des aubes situées en aval, et ce sur sensiblement toute la dimension radiale des aubes.

Si le résultat de l'étape 46 de vérification est négatif, on effectue une étape complémentaire 48 de modification et d'optimisation de la géométrie des aubes. On obtient alors une nouvelle définition géométrique (étape 40) des aubes de chaque aubage.

On vérifie ensuite, à l'étape suivante 50, le comportement aérodynamique des aubes optimisées sur une ou plusieurs lignes de courant. Cette vérification peut être réalisée par des calculs d'écoulements stationnaires basés sur les équations de Navier Stokes en deux dimensions ou en trois dimensions, qui sont bien connus de l'homme du métier. Cette étape 50 permet de valider rapidement les modifications géométriques des aubes.

On réitère ensuite les étapes 42 et 44 et on vérifie également lors d'une étape 46 si le résultat recherché est atteint ou peut encore être amélioré.

La boucle représentée par les étapes successives 40, 50, 42, 44, 46 et 48 peut être réalisée une ou plusieurs fois si nécessaire jusqu'à ce que le résultat de l'étape 46 soit positif. Cette boucle peut être automatisée pour pouvoir définir à chaque étape 48 les modifications géométriques des aubes à réaliser en fonction du résultat de l'étape 46. Cette automatisation est rendue possible par l'utilisation d'un algorithme d'optimisation qui permet de limiter le nombre de répétitions de cette boucle pour obtenir la convergence souhaitée sur le redressement des sillages. Un certain nombre d'algorithmes d'optimisation sont décrits dans la littérature scientifique. A titre d'exemple, la référence suivante décrit l'un d'eux :
- Milagros Vau Grieken, « Optimisation pour l'apprentissage et apprentissage pour l'optimisation », Université Paul Sabatier, Laboratoire MIP (UMR 5640), avril 2005.

Les étapes précitées sont basées sur des calculs relativement simples et leurs réitérations ne sont donc pas coûteuses en temps de calcul par opposition aux méthodes de conception actuellement disponibles dans la technique.

Lorsque le résultat de l'étape 46 est positif, on vérifie les performances globales de la turbine, sans tenir compte des couplages aérodynamiques multi-étages (étape 52). On peut pour cela utiliser au moins un calcul d'écoulement stationnaire basé sur les équations de Navier Stokes en trois dimensions. La première phase du procédé selon l'invention est alors terminée. Cette première phase n'a pas pour vocation de décrire complètement le cheminement spatio-temporel des particules de fluide contenues dans les sillages. Cette phase permet d'avoir accès essentiellement aux données de l'écoulement moyen, ces données étant suffisantes pour redresser les sillages sur sensiblement toute la hauteur de veine.

La seconde phase 38 consiste notamment à définir le cheminement exact spatio-temporel des particules de fluide des sillages, puis à positionner angulairement les aubages de même type les uns par rapport aux autres de façon à réaliser le couplage aérodynamique multi-étages sur tous les aubages de même type de la turbine.

La seconde phase 38 peut être réalisée sur deux aubages successifs de même type de la turbine, voire plus, et peut éventuellement être réalisée simultanément sur l'ensemble de la turbine.

Elle consiste d'abord à identifier la position angulaire optimale de l'aubage du second étage par rapport à l'aubage du premier étage amont et en particulier aux sillages formés par les aubes de l'aubage de cet étage amont. On peut pour cela utiliser au moins un calcul d'écoulement instationnaire sur le couple d'aubages considéré, qui est également bien connu de l'homme du métier. Plusieurs méthodes de calcul instationnaire sont disponibles. L'une d'elles est décrite dans les publications référencées ci-après :
- Gerolymos, G.A., and Chapin, V.C., "Generalized Expression of Chorochronic Periodicity in Turbomachinery Blade-Row Interaction," Rech. Aerosp., Vol. 1991_5, No. 5, 1991, pp. 69-73,
- Gerolymos, G.A., Michon, G.-J., et Neubauer, J., "Analysis and Application of Chorochronic Periodicity in Turbomachinery Rotor/Stator Interaction Computations," J. Prop. Power, Vol. 18, 2002, pp. 1139-1152.

Une fois que cette identification est réalisée, on cale angulairement le second aubage par rapport à l'aubage amont, et on effectue ensuite la même étape 54 pour les aubages des étages 3, 4, ..., k, situés en aval.

Une fois que le couplage aérodynamique multi-étages a été réalisé sur les aubages d'un même type de la turbine, le procédé peut être répété pour réaliser le couplage sur les aubages de type différent de la turbine.

En variante, on alterne le calage angulaire de deux aubages d'un même type et le calage angulaire de deux aubages de l'autre type, depuis l'amont jusqu'à l'aval.

On vérifie enfin les performances globales de la turbine (étape 56) en considérant cette fois le couplage aérodynamique multi-étages. On peut utiliser pour cela au moins un calcul d'écoulement instationnaire sur au moins deux aubages successifs de même type, et éventuellement sur l'ensemble de la turbine. La figure 4 illustre un exemple où le calcul d'écoulement instationnaire est réalisé par tranches de trois aubages minimum successifs de même type. Cette dernière étape permet de valider la seconde phase 38 du procédé.

## Revendications

1. Procédé de conception d'une turbine multi-étages (10) de turbomachine, chaque étage de la turbine comprenant un aubage de stator (12) et un aubage de rotor (14) formés chacun d'une rangée annulaire d'aubes (16, 20), les aubages de stator (ou de rotor, respectivement) comportant chacun un même nombre d'aubes ou un multiple du nombre d'aubes d'un aubage de même type situé en amont, **caractérisé en ce qu'**il consiste, pour tous les aubages de stator ou de rotor, à :
a) modifier simultanément les géométries des aubes (16, 20) des différents aubages, pour redresser les sillages des bords de fuite de ces aubes, sur sensiblement toute la dimension radiale des aubes, puis
b) positionner angulairement les aubages (12, 14), les uns par rapport aux autres, de sorte que les sillages des aubes de stator (ou de rotor, respectivement) d'un étage n viennent impacter avec une certaine tolérance d'angle sur les bords d'attaque des aubes de stator (ou de rotor, respectivement) d'un étage aval n+1, pour réaliser un couplage aérodynamique multi-étages simultanément sur l'ensemble de la turbine.

2. Procédé selon la revendication 1, **caractérisé en ce qu'**il consiste, à l'étape a), à :
1) définir les géométries des aubes (16, 20) des différents aubages (12, 14), sur sensiblement toute la dimension radiale des aubes,
2) déterminer l'écoulement moyen des gaz autour des aubes des différents aubages, sur sensiblement toute la dimension radiale des aubes, par exemple par un calcul d'écoulement axisymétrique sur toute la turbine,
3) déterminer l'évolution des sillages des aubes des différents aubages, et
4) vérifier que les sillages des aubes de stator (ou de rotor, respectivement) d'un étage n sont sensiblement parallèles, avec une tolérance d'angle donnée, aux bords d'attaque des aubes de stator (ou de rotor, respectivement) d'un étage aval n+1, respectivement.

3. Procédé selon la revendication 2, **caractérisé en ce que**, lorsque le résultat de la vérification à l'étape 4) est négatif, il consiste en outre à :
5) modifier les géométries des aubes (16, 20) des différents aubages (12, 14), sur toute la dimension radiale des aubes,
6) vérifier les comportements aérodynamiques des aubes modifiées, par exemple par des calculs d'écoulements stationnaires en deux ou en trois dimensions pour chaque aubage, et
7) recommencer les étapes 2), 3) et 4).

4. Procédé selon la revendication 3, **caractérisé en ce que** les modifications géométriques des aubes à l'étape 5) sont déterminées par un algorithme d'optimisation.

5. Procédé selon la revendication 4, **caractérisé en ce que** les étapes 5), 6) et 7) sont répétées une ou plusieurs fois, jusqu'à ce que le résultat de la vérification à l'étape 7) soit positif.

6. Procédé selon la revendication 4 ou 5, **caractérisé en ce qu'**on modifie les géométries des aubes (16, 20) des différents aubages (12, 14) en faisant varier un ou plusieurs paramètres choisis par exemple parmi : la répartition spatiale des aubes, la courbure des aubes, les positions angulaires des bords d'attaque et de fuite des aubes.

7. Procédé selon l'une des revendications 4 à 6, **caractérisé en ce qu'**il consiste, lors de la modification des géométries des aubes (16, 20) d'un aubage, à conserver la répartition de charges moyenne de cet aubage.

8. Procédé selon l'une des revendications 3 à 7, **caractérisé en ce qu'**il consiste, après l'étape 4) ou 7), à vérifier le comportement aérodynamique de la turbine en analysant l'évolution des gaz dans la turbine, par exemple par un calcul d'écoulement stationnaire en trois dimensions.

9. Procédé selon l'une des revendications précédentes, **caractérisé en ce qu'**il consiste, à l'étape b), à :
i) identifier, par exemple par au moins un calcul d'écoulement instationnaire, la position angulaire optimale de l'aubage (12, 14) de stator (ou de rotor, respectivement) de chaque étage n+1 par rapport à l'aubage de stator (ou de rotor, respectivement) de l'étage amont n et aux sillages des aubes de l'aubage de cet étage n, et à
ii) positionner angulairement les aubages, les uns par rapport aux autres, depuis l'amont jusqu'à l'aval, de sorte que les sillages formés par les aubes (16, 20) de l'aubage de stator (ou de rotor, respectivement) d'un étage n viennent impacter avec une certaine tolérance d'angle sur les bords d'attaque des aubes de stator (ou de rotor, respectivement) d'un étage aval n+1.

10. Procédé de fabrication d'une turbine multi-étages de turbomachine, **caractérisé en ce qu'**il consiste à concevoir une turbine par le procédé selon l'une des revendications précédentes, puis à réaliser cette turbine.

## Patentansprüche

1. Verfahren zum Konstruieren einer Mehrstufenturbine (10) einer Turbomaschine bzw. eines Turbotriebwerks, wobei jede Stufe der Turbine eine Statorbeschaufelung (12) und eine Rotorbeschaufelung (14) aufweist, die jeweils aus einer ringförmigen Reihe von Schaufeln (16, 20) gebildet sind, wobei die Stator- (bzw. Rotor-) Beschaufelung jeweils eine gleiche Anzahl von Schaufeln oder ein Mehrfaches der Anzahl von Schaufeln einer stromaufwärts liegenden Beschaufelung gleichen Typs aufweist, **dadurch gekennzeichnet, dass** es für alle Stator- bzw. Rotorbeschaufelungen darin besteht,
a) gleichzeitig die Geometrien der Schaufeln (16, 20) der verschiedenen Beschaufelungen zu verändern, um die Nachlaufströmungen der Hinterkanten dieser Schaufeln im Wesentlichen über die gesamte radiale Abmessung der Schaufeln zu korrigieren, dann
b) die Beschaufelungen (12, 14) winklig zueinander zu positionieren, so dass die Nachlaufströmungen der Stator- (bzw. Rotor-) Schaufeln einer Stufe n mit einer gewissen Winkeltoleranz an den Vorderkanten der Stator- (bzw. Rotor-) Schaufeln einer stromabwärtigen Stufe n+1 anströmen, um eine mehrstufige, aerodynamische Kopplung gleichzeitig an der gesamten Turbine zu bewirken.

2. Verfahren nach Anspruch 1, **dadurch gekennzeichnet, dass** es darin besteht, in Schritt a)
1) die Geometrien der Schaufeln (16, 20) der verschiedenen Beschaufelungen (12, 14) im Wesentlichen über die gesamte radiale Abmessung der Schaufeln zu definieren,
2) die mittlere Gasströmung um die Schaufeln der verschiedenen Beschaufelungen herum im Wesentlichen über die gesamte radiale Abmessung der Schaufeln beispielsweise durch Berechnung der axialsymmetrischen Strömung über die gesamte Turbine zu bestimmen,
3) den Verlauf der Nachlaufströmungen der Schaufeln der verschiedenen Beschaufelungen zu bestimmen, und
4) zu überprüfen, dass die Nachlaufströmungen der Stator- (bzw. Rotor-) Schaufeln einer Stufe n mit einer gegebenen Winkeltoleranz an den Vorderkanten der Stator- (bzw. Rotor-) Schaufeln einer stromabwärtigen Stufe n+1 jeweils im Wesentlichen parallel verlaufen.

3. Verfahren nach Anspruch 2, **dadurch gekennzeichnet, dass** dann, wenn das Ergebnis der Überprüfung aus Schritt 4) negativ ist, es ferner darin besteht,
5) die Geometrien der Schaufeln (16, 20) der verschiedenen Beschaufelungen (12, 14) über die gesamte radiale Abmessung der Schaufeln zu verändern,
6) die aerodynamischen Verhalten der veränderten Schaufeln beispielsweise durch Berechnungen der zwei- oder dreidimensionalen stationären Strömungen für jede Beschaufelung zu überprüfen, und
7) die Schritte 2), 3) und 4) erneut durchzuführen.

4. Verfahren nach Anspruch 3, **dadurch gekennzeichnet, dass** die geometrischen Veränderungen der Schaufeln in Schritt 5) über einen Optimierungsalgorithmus bestimmt werden.

5. Verfahren nach Anspruch 4, **dadurch gekennzeichnet, dass** die Schritte 5), 6) und 7) einmal oder mehrmals wiederholt werden, bis das Ergebnis der Überprüfung aus Schritt 7) positiv ist.

6. Verfahren nach Anspruch 4 oder 5, **dadurch gekennzeichnet, dass** die Geometrien der Schaufeln (16, 20) der verschiedenen Beschaufelungen (12, 14) verändert werden, indem ein oder mehrere Parameter variiert werden, die ausgewählt sind beispielsweise aus der räumlichen Verteilung der Schaufeln, der Krümmung der Schaufeln, der Winkelpositionen der Vorder- und der Hinterkanten der Schaufeln.

7. Verfahren nach einem der Ansprüche 4 bis 6, **dadurch gekennzeichnet, dass** es darin besteht, bei der Veränderung der Geometrien der Schaufeln (16, 20) einer Beschaufelung die mittlere Lastverteilung dieser Beschaufelung beizubehalten.

8. Verfahren nach einem der Ansprüche 3 bis 7, **dadurch gekennzeichnet, dass** es darin besteht, nach Schritt 4) oder 7) das aerodynamische Verhalten der Turbine zu überprüfen, indem der Verlauf der Gase in der Turbine beispielsweise durch Berechnung der dreidimensionalen, stationären Strömung zu analysieren.

9. Verfahren nach einem der vorangehenden Ansprüche, **dadurch gekennzeichnet, dass** es darin besteht, in Schritt b)
i) durch beispielsweise zumindest einer Berechnung der instationären Strömung die optimale Winkelposition der Beschaufelung (12, 14) des Stators (bzw. des Rotors) jeder Stufe n+1 bezüglich der Beschaufelung des Stators (bzw. des Rotor) der stromaufwärtigen Stufe n und bezüglich der Nachlaufströmungen der Schaufeln der Beschaufelung dieser Stufe n zu identifizieren, und
ii) die Beschaufelungen von stromaufwärts nach stromabwärts im Winkel zueinander zu positionieren, so dass die von den Schaufeln (16, 20) der Stator- (bzw. Rotor-) Beschaufelung einer Stufe n gebildeten Nachlaufströmungen mit einer gewissen Winkeltoleranz an den Vorderkanten der Stator- (bzw. Rotor-) Schaufeln einer stromabwärtigen Stufe n+1 anströmen.

10. Verfahren zum Herstellen einer Mehrstufenturbine einer Turbomaschine bzw. eines Turbotriebwerks, **dadurch gekennzeichnet, dass** es darin besteht, eine Turbine mit dem Verfahren nach einem der vorangehenden Ansprüche zu konstruieren und dann diese Turbine herzustellen.

## Claims

1. A method of designing a multistage turbine (10) for a turbomachine, each stage of the turbine comprising a stator row (12) and a rotor row (14), each formed by an annular row of airfoils, each stator (or rotor, respectively) row having the same number of airfoils or a number that is a multiple of the number of airfoils of a row of the same type situated upstream, wherein the method consists, for all of the stator or rotor rows:
a) in modifying simultaneously the shape of the airfoils (16,20) of the various rows to straighten out the wakes from the trailing edges of said airfoils over substantially the entire radial extent of the airfoils; and then
b) in angularly positioning the rows (12,14) relative to one another in such a manner that the wakes from the stator (or rotor, respectively) rows of a stage n impact within a certain angular tolerance on the leading edges of the stator (or rotor, respectively) rows of a downstream stage n+1, so as to achieve multistage aerodynamic coupling simultaneously over the turbine as a whole.

2. A method according to claim 1, wherein, in step a), it consists:
1) in defining the shapes of the airfoils (16,20) of the various rows (12,14) over substantially the entire radial extent of the airfoils;
2) in determining the mean flow of gas around the airfoils of the various rows over substantially the entire radial extent of the airfoils; e.g. by axially symmetrical flow calculation ever the entire turbine
3) in determining how the wakes from the airfoils of the various rows vary; and
4) in verifying that the wakes from the stator (or rotor, respectively) airfoils of a stage n are substantially parallel, within a given angular tolerance, to the leading edges of the stator (or rotor, respectively) airfoils of a respective downstream n+1 stage.

3. A method according to claim 2, wherein, when the result of the verification in step 4) is negative, the method further consists:
5) in modifying the shapes of the airfoils (16,20) of the various rows (12,14) over the entire radial extent of the airfoils;
6) in verifying the aerodynamic behavior of the modified airfoils, e.g. by two -or three - dimensional steady flow calculations for each row; and
7) in repeating steps 2), 3), and 4).

4. A method according to claim 3, wherein the modifications to the shapes of the airfoils in step 5) are determined by an optimization algorithm.

5. A method according to claim 4, wherein steps 5), 6), and 7) are repeated one or more times until the result of the verification in step 7) is positive.

6. A method according to claim 4 or 5, wherein the shapes of the airfoils (16,20) of the various rows (12,14) are modified by varying one or more parameters selected from: the spatial distribution of the airfoils; the curvature of the airfoils; and the angular positions of the leading edges and trailing edges of the airfoils.

7. A method according to any of the claims 4 to 6, wherein, during the modification of the shapes of the airfoils (16,20) of a row, the method consists in conserving the mean load distribution of the row.

8. A method according to any of the claims 3 to 7, wherein, after step 4) or 7), the method consists in verifying the aerodynamic behavior of the turbine by analyzing gas variation within the turbine, e.g. by a three dimensional steady flow calculation.

9. A method according to any of the proceeding claims, wherein, in step b), it consists:
i) in identifying, e.g. by using at least one unsteady flow calculation, the optimum angular position for the stator (or rotor, respectively) row (12,14) of each stage n+1 relative to the stator (or rotor, respectively) row of the upstream stage n and relative to the wakes of the airfoils of the row of said stage n; and
ii) in angularly positioning the rows relative to one another from upstream to downstream in such a manner that the wakes formed by the airfoils (16,20) of the stator (or rotor, respectively) row of a stage n impact within a certain angular tolerance against the leading edges of the stator (or rotor, respectively) airfoils of a downstream stage n+1.

10. A method of fabricating a multistage turbine for a turbomachine, wherein the method consists in designing a turbine by the method of any of the proceeding claims, and then in making the turbine.
